(19) **Europäisches Patentamt / European Patent Office / Office européen des brevets**

(11) **EP 3 896 998 B1**

(12) # EUROPEAN PATENT SPECIFICATION

(45) Date of publication and mention
of the grant of the patent:
**30.07.2025 Bulletin 2025/31**

(21) Application number: **20171810.3**

(22) Date of filing: **28.04.2020**

(51) International Patent Classification (IPC):
**H04R 25/00** *(2006.01)* **G10L 21/0364** *(2013.01)*
**G10L 25/81** *(2013.01)*

(52) Cooperative Patent Classification (CPC):
**H04R 25/70; G10L 21/0364; H04R 25/505;**
G10L 25/81; H04R 2225/39; H04R 2225/41;
H04R 2225/43

(54) **SYSTEMS AND METHODS FOR PROVIDING CONTENT-SPECIFIC, PERSONALIZED AUDIO REPLAY ON CUSTOMER DEVICES**

SYSTEME UND VERFAHREN ZUR BEREITSTELLUNG INHALTSSPEZIFISCHER PERSONALISIERTER AUDIOWIEDERGABE AUF KUNDENVORRICHTUNGEN

SYSTÈMES ET PROCÉDÉS POUR FOURNIR UNE LECTURE AUDIO PERSONNALISÉE SPÉCIFIQUE AU CONTENU SUR DES DISPOSITIFS CLIENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.04.2020 US 202016851048**

(43) Date of publication of application:
**20.10.2021 Bulletin 2021/42**

(73) Proprietor: **Mimi Hearing Technologies GmbH**
**10245 Berlin (DE)**

(72) Inventors:
• **HIRSCH, Michael**
  **10245 Berlin (DE)**

• **KLIMCZAK, Ryan**
  **10245 Berlin (DE)**

(74) Representative: **MERH-IP Matias Erny Reichl Hoffmann**
**Patentanwälte PartG mbB**
**Paul-Heyse-Straße 29**
**80336 München (DE)**

(56) References cited:
**EP-A1- 3 584 927      EP-A1- 3 598 442**
**US-A1- 2010 241 256      US-A1- 2012 063 616**
**US-A1- 2014 334 644      US-A1- 2020 029 159**

**Description**

**FIELD OF INVENTION**

This invention relates generally to the field of digital signal processing (DSP), audio engineering and audiology, and more specifically to systems and methods for providing personalized audio based on user hearing test results and based on specific audio content.

**BACKGROUND**

Traditional DSP sound personalization methods often rely on administration of an audiogram to parameterize a frequency gain compensation function. Typically, a pure tone threshold (PTT) hearing test is employed to identify frequencies in which a user exhibits raised hearing thresholds and the frequency output is modulated accordingly. These gain parameters are stored locally on the user's device for subsequent audio processing.

The use of frequency compensation is inadequate to the extent that solely applying a gain function to the audio signal does not sufficiently restore audibility. The gain may enable the user to recapture previously unheard frequencies, but the user may subsequently experience loudness discomfort. Listeners with sensorineural hearing loss typically have similar, or even reduced, discomfort thresholds when compared to normal hearing listeners, despite their hearing thresholds being raised. To this extent, their dynamic aperture is narrower and simply adding gain would be detrimental to their hearing health in the long run.

Although hearing loss typically begins at higher frequencies, listeners who are aware that they have hearing loss do not typically complain about the absence of high frequency sounds. Instead, they report difficulties listening in a noisy environment and in hearing out the details in a complex mixture of sounds, such as in an audio stream of a radio interview conducted in a busy street. In essence, off frequency sounds more readily mask information with energy in other frequencies for hearing-impaired (HI) individuals - music that was once clear and rich in detail becomes muddled. This is because music itself is highly self-masking, i.e. numerous sound sources have energy that overlaps in the frequency space, which can reduce outright detectability, or impede the users' ability to extract information from some of the sources.

US 2010/241256 A1 discloses a method of generating a Personalized Audio Content (PAC) comprising selecting Audio Content (AC) to personalize, selecting an Earprint and generating a PAC using the Earprint to modify the AC.

US 2020/029159 A1 discloses systems and methods for modifying an audio signal using custom psychoacoustic models. A user's hearing profile is first obtained. Subsequently, an audio processing function is parameterized so as to optimize the user's perceptually relevant information. The method for calculating the user's perceptually relevant information comprises first processing audio signal samples using the parameterized processing function and then transforming samples of the processed audio signals into the frequency domain. Next, masking and hearing thresholds are obtained from the user's hearing profile and applied to the transformed audio sample, wherein the user's perceived data is calculated. Once perceptually relevant information is optimized, the resulting parameters are transferred to the audio processing function and an output audio signal is processed.

Other relevant prior art disclosures are known from US 2014/334644 A1, EP 3 584 927 A1, US 2012/063616 A1, and EP 3 598 442 A1.

As hearing deteriorates, the signal-conditioning capabilities of the ear begin to break down, and thus HI listeners need to expend more mental effort to make sense of sounds of interest in complex acoustic scenes (or miss the information entirely). A raised threshold in an audiogram is not merely a reduction in aural sensitivity, but a result of the malfunction of some deeper processes within the auditory system that have implications beyond the detection of faint sounds. To this extent, the addition of simple frequency gain provides an inadequate solution and the use of a multiband dynamic compression system would be more ideally suited as it more readily addresses the deficiencies of an impaired user.

Moreover, it is further inadequate to apply the same parameterized DSP algorithm to all types of audio content. Different forms of audio content require different DSP parameter settings as these systems aren't "one size fits all". For example, the requirements for voice processing are different than for more complex audio streams, such as for movies or music. For example, users are more willing to accept more aggressive forms of compression for voice calls to improve speech clarity than they are for music. Likewise, in a movie, a user may want to fit a specific DSP somewhere in between that of pure speech and music - so that a balance is achieved between voice clarity and greater detail in background sound and music.

Accordingly, it is an aspect of the present disclosure to provide systems and methods for providing content-specific, personalized audio replay on consumer devices.

**SUMMARY OF THE INVENTION**

The invention is as defined in the appended set of claims.

According to aspect of the present disclosure, provided are systems and methods for providing content-specific, personalized audio replay on consumer devices. According to an aspect of the present disclosure, provided are methods and systems for processing an audio signal, the method comprising: storing a user hearing profile; calculating at least one set of audio content-specific DSP (digital signal processing) parameters for each of one or more sound personalization algorithms, the calculation of the content-specific DSP parameters based on at least the user hearing profile; associating one or more of the calculated sets of content-specific DSP parameters with a content-identifier for the specific content; in response to an audio stream on an audio output device, analyzing the audio stream to determine at least one content type of the audio stream; based on the at least one determined content type of the audio stream, outputting corresponding content-specific DSP parameters to the audio output device, wherein the corresponding content-specific DSP parameters are outputted based at least in part on their content-identifier. The method may further comprise processing, on the audio output device, an audio signal by using a given sound personalization algorithm parameterized by the corresponding content-specific DSP parameters.

In an aspect of the disclosure, the content-identifier further indicates the given sound personalization algorithm for which a given set of content-specific DSP parameters was calculated.

In a further aspect of the disclosure, the calculation of the content-specific DSP parameters further comprises applying a scaled processing level for the different types of specific content, wherein each scaled processing level is calculated based on one or more target age hearing curves that are different from a hearing curve of the user.

According to the claimed invention, the calculation of the content-specific DSP parameters further comprises calculating one or more wet mixing parameters and dry mixing parameters to optimize the content-specific DSP parameters for the different types of specific content.

In a further aspect of the disclosure, the calculation of the content-specific DSP parameters further comprises analyzing perceptually relevant information (PRI) to optimize a PRI value provided by the content-specific DSP parameters for the different types of specific content.

In a further aspect of the disclosure, the method may comeprise generating the user hearing profile. For example, the user hearing profile is generated by conducted at least one hearing test on the audio output device of a user.

In a further aspect of the disclosure, the hearing test is one or more of a masked threshold test (MT test), a pure tone threshold test (PTT test), a psychophysical tuning curve test (PTC test), or a cross frequency simultaneous masking test (xF-SM test).

In a further aspect of the disclosure, the user hearing profile is generated at least in part by analyzing a user input of demographic information to thereby interpolate a representative hearing profile.

In a further aspect of the disclosure, the user input of demographic information includes an age of the user.

In a further aspect of the disclosure, the sound personalization algorithm is a multiband dynamic processor; and the content-specific DSP parameters include one or more ratio values and gain values.

In a further aspect of the disclosure, the sound personalization algorithm is an equalization DSP; and the content-specific DSP parameters include one or more gain values and limiter values.

In a further aspect of the disclosure, the content type of the audio stream is determined by analyzing one or more metadata portions associated with the audio stream.

In a further aspect of the disclosure, the one or more metadata portions are extracted from the audio stream.

In a further aspect of the disclosure, the one or more metadata portions are calculated locally by an operating system of the audio output device.

In a further aspect of the disclosure, the content types include voice, video, music, and specific music genres.

In a further aspect of the disclosure, the audio output device is one of a mobile phone, a smart speaker, a television, headphones, or hearables.

In a further aspect of the disclosure, the at least one set of content-specific DSP parameters is stored on a remote server.

In a further aspect of the disclosure, the at least one set of content-specific DSP parameters is stored locally on the audio output device.

In a further aspect of the disclosure, the content type of the audio stream is determined by performing a Music Information Retrieval (MIR) calculation.

In a further aspect of the disclosure, the content type of the audio stream is determined by performing a spectral analysis calculation on the audio stream or providing the audio stream as input to a speech detection algorithm.

In a further aspect of the disclosure, an apparatus for processing an audio signal is provided. The apparatus comprises a processing unit and a memory for storing a user hearing profile. The apparatus may have an interface to an audio output device. The processing unit is configured for: calculating at least one set of audio content-specific DSP (digital signal processing) parameters for each of one or more sound personalization algorithms, the calculation of the content-specific DSP parameters based on at least the user hearing profile; associating one or more of the calculated sets of content-specific DSP parameters with a content-identifier for the specific content; in response to an audio stream on the audio output device, analyzing the audio stream to determine at least one content type of the audio stream; and based on the at least one determined content type of the audio stream, outputting corresponding content-specific DSP parameters to the audio output device for processing an audio signal on the audio output device by using a given sound personalization algorithm parameterized by the corresponding content-specific DSP parameters, wherein the corresponding content-specific DSP parameters are outputted based at least in part on their content-identifier.

In embodiments, the apparatus and the audio output device may be implemented in a same device, e.g. mobile phones, computers, televisions, hearing aids, headphones, smart speakers, hearables, and/or speaker systems. In this case, the content-specific DSP parameters are output from the apparatus itself to the DSP algorithm in the audio output device, e.g. via a software interface or API. Alternatively, apparatus and the audio output device may be different devices. For example, the apparatus may be implemented in a server and the audio output device may be a mobile phone, computer, television, hearing aid, headphone, smart speaker, hearable, and/or speaker system. In this case, the corresponding content-specific DSP parameters may be output to the audio output device via an interface. The interface between the apparatus and the audio output device may be implemented in various ways. The interface may be a software or hardware interface, communications interface, a direct or indirect interface via a cable, a wireless connection, a network connection, etc.

The audio stream may be received from the audio output device via the software or hardware interface. Alternatively, an indicator of the audio stream may be received from the audio output device via the interface and the audio stream accessed from an audio server based on the identifier. In examples, the processed audio signal may relate to the same audio content or content type as the analyzed audio stream. In general, it is envisioned that x-type of audio content has associated DSP parameters that can be reused whenever audio content of the same type x occurs. In variations, these DSP parameters can be used for different audio content types as well, e.g. for audio of similar content type.

The processing unit may comprise a processor and instructions to control execution of a computer program on the processor may be stored in the memory.

Another aspect of the present disclosure may relate to computer software, a computer program product or any media or data embodying computer software instructions for execution on a programmable computer or dedicated hardware comprising at least one processor, which causes the at least one processor to perform any of the method steps disclosed in the present disclosure.

Notably, it is understood that methods according to the disclosure relate to methods of operating the apparatuses according to the above aspect and variations thereof, and that respective statements made with regard to the apparatuses likewise apply to the corresponding methods, and vice versa, such that similar description may be omitted for the sake of conciseness.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors.

The term "sound personalization algorithm", as used herein, is defined as any digital signal processing (DSP) algorithm that processes an audio signal to enhance the clarity of the signal to a listener. The DSP algorithm may be, for example: an equalizer, an audio processing function that works on the subband level of an audio signal, a multiband compressive system, or a non-linear audio processing algorithm.

The term "audio content type", as used herein, is defined as any specific type of audio content in an audio stream, such as voice, video, music, or specific genres of music, such as rock, jazz, classical, pop, etc.

The term "audio output device", as used herein, is defined as any device that outputs audio, including, but not limited to: mobile phones, computers, televisions, hearing aids, headphones, smart speakers, hearables, and/or speaker systems.

The term "headphone", as used herein, is any earpiece bearing a transducer that outputs soundwaves into the ear. The earphone may be a wireless hearable, a corded or wireless headphone, a hearable device, or any pair of earbuds.

The term "hearing test", as used herein, is any test that evaluates a user's hearing health, more specifically a hearing test administered using any transducer that outputs a sound wave. The test may be a threshold test or a suprathreshold test, including, but not limited to, a psychophysical tuning curve (PTC) test, a masked threshold (MT) test, a temporal fine structure test (TFS), temporal masking curve test and a speech in noise test.

The term "server", as used herein, generally refers to a computer program or device that provides functionalities for other programs or devices.

## BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof, which are illustrated in the appended drawings. Understand that these drawings depict only exemplary embodiments of the disclosure and are not therefore to be considered to be limiting of its scope, the principles herein are described and explained with additional specificity and detail through the use of the accompanying drawings in which:

**FIGS. 1A-B** illustrate example graphs show the deterioration of human audiograms and masking thresholds with age;

**FIGS. 2A-B** illustrate an example of the PTC and MT test paradigms;

**FIGS. 3A-C** illustrate an example of a cross frequency simultaneous masking (xF-SM) paradigm for an MT test;

**FIG. 4** illustrates a method of content-specific, personalized audio replay according to one or more aspects of the present disclosure;

**FIG. 5** illustrates an exemplary multiband dynamic processing system;

**FIG. 6** illustrates a method of content-specific, personalized audio replay according to one or more aspects of the present disclosure;

**FIG. 7** illustrates a method of determining content-specific DSP parameters for a sound personalization algorithm according to one or more aspects of the present disclosure.

**FIG. 8** illustrates an exemplary DSP circuitry that enables wet and dry mixing;

**FIG. 9** illustrates a method for attaining DSP parameters from user hearing data through the optimization of perceptually relevant information.

**FIG. 10** illustrates a method of attaining ratio and threshold parameters from a user masking contour curve;

**FIG. 11** illustrates a graph for attaining ratio and threshold parameters from a user PTC curve;

**FIGS. 12A-C** conceptually illustrate masked threshold curve widths for three different users, which can be used for best fit and / or nearest fit calculations;

**FIG. 13** conceptually illustrates audiogram plots for three different users x, y and z, data points which can be used for best fit and / or nearest fit calculations;

**FIG. 14** illustrates a method for parameter calculation using a best-fit approach;

**FIG. 15** illustrates a method for parameter calculation using an interpolation of nearest-fitting hearing data;

**FIG. 16** illustrates an example system embodiment.

## DETAILED DESCRIPTION

Various embodiments of the disclosure are discussed in detail below. While specific implementations are discussed, it should be understood that this is done for illustration purposes only. Thus, the following description and drawings are illustrative and are not to be construed as limiting the scope of the embodiments described herein. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and, such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the

**EP 3 896 998 B1**

following description and appended claims, or can be learned by the practice of the principles set forth herein.

Various example embodiments of the disclosure are discussed in detail below. While specific implementations are discussed, it should be understood that this is done for illustration purposes only.

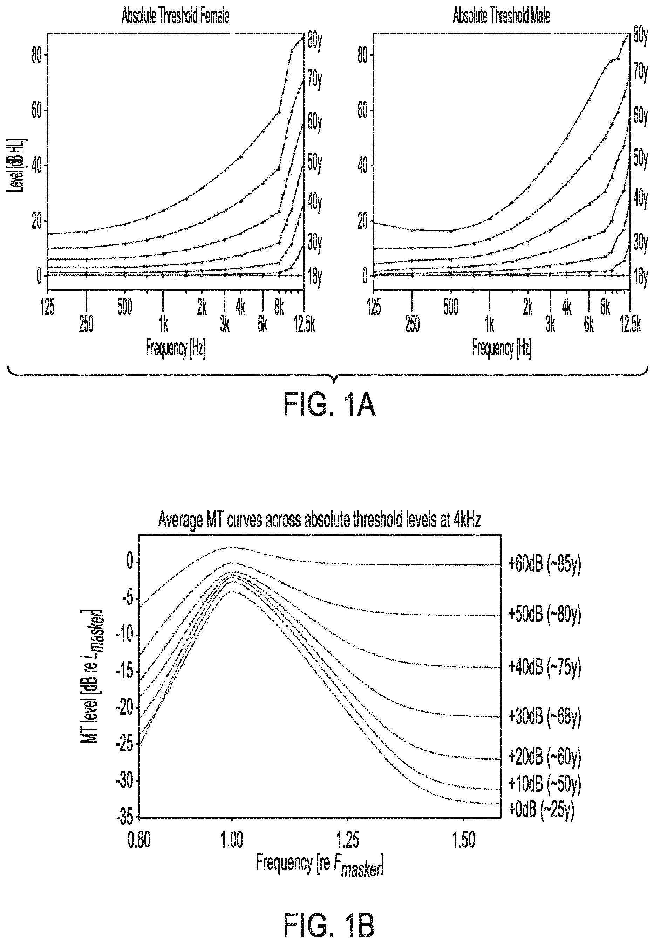

It is an aspect of the present disclosure to provide systems and methods for providing audio content-specific, personalized audio replay on consumer devices. FIGS. 1A-B underscore the importance of sound personalization, illustrating the deterioration of a listener's hearing ability over time. Past the age of 20 years old, humans begin to lose their ability to hear higher frequencies, as illustrated by FIG. 1A (albeit above the spectrum of human voice). This steadily becomes worse with age as noticeable declines within the speech frequency spectrum are apparent around the age of 50 or 60. However, these pure tone audiometry findings mask a more complex problem as the human ability to understand speech may decline much earlier. Although hearing loss typically begins at higher frequencies, listeners who are aware that they have hearing loss do not typically complain about the absence of high frequency sounds. Instead, they report difficulties listening in a noisy environment and in hearing out the details in a complex mixture of sounds, such as in a telephone call. In essence, off-frequency sounds more readily mask a frequency of interest for hearing impaired individuals - conversation that was once clear and rich in detail becomes muddled. As hearing deteriorates, the signal-conditioning capabilities of the ear begin to break down, and thus hearing-impaired listeners need to expend more mental effort to make sense of sounds of interest in complex acoustic scenes (or miss the information entirely). A raised threshold in an audiogram is not merely a reduction in aural sensitivity, but a result of the malfunction of some deeper processes within the auditory system that have implications beyond the detection of faint sounds.

To this extent, FIG. 1B illustrates key, discernable age trends in suprathreshold hearing. Through the collection of large datasets, key age trends can be ascertained, allowing for the accurate parameterization of personalization DSP algorithms. In a multiband compressive system, for example, the threshold and ratio values of each sub-band signal dynamic range compressor (DRC) can be modified to reduce problematic areas of frequency masking, while post-compression sub-band signal gain can be further applied in the relevant areas. Masked threshold curves depicted in FIG. 1B represent a similar paradigm for measuring masked threshold. A narrow band of noise, in this instance around 4kHz, is fixed while a probe tone sweeps from 50% of the noise band center frequency to 150% of the noise band center frequency. Again, key age trends can be ascertained from the collection of large MT datasets.

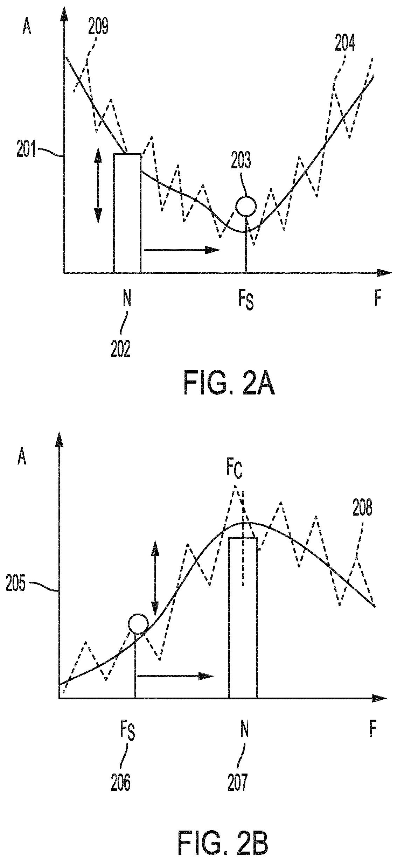

FIGS. 2A-B illustrate a method in which a PTC test 201 or MT test 205 may be conducted to assess a user's hearing. A psychophysical tuning curve (PTC), consisting of a frequency selectivity contour 204 extracted via behavioral testing, provides useful data to determine an individual's masking contours. In one embodiment of the test, a masking band of noise 202 is gradually swept across frequency, from below the probe frequency 203 to above the probe frequency 203. The user then responds when they can hear the probe and stops responding when they no longer hear the probe. This gives a jagged trace that can then be interpolated to estimate the underlying characteristics of the auditory filter. Other methodologies known in the prior art may be employed to attain user masking contour curves. For instance, an inverse paradigm may be used in which a probe tone 206 is swept across frequency while a masking band of noise 207 is fixed at a center frequency (known as a "masked threshold test" or "MT test").

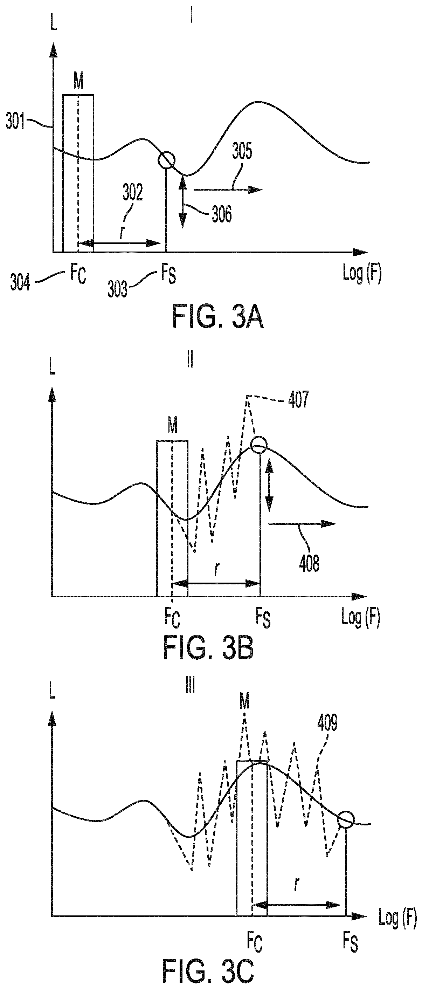

Other suprathreshold testing may be used. A cross frequency masked threshold test is illustrated in FIGS. 3A-C. The y-axis represents the amplitude of the depicted signals, which include a noise masking probe M 304 and a tone signal probe 303. The x-axis is logarithmic in frequency F. As illustrated, noise masking probe M 304 has a center frequency $F_c$ and is kept at a fixed amplitude while being swept in frequency (i.e. the left to right progression seen in the graphs of FIGS. 3A-C). In some embodiments, the absolute width of the masking probe M 304 is dynamic, e.g. 0.2 octaves on either side of the center frequency $F_c$. Tone signal probe 303 has a frequency $F_s$ and a variable amplitude, i.e. an amplitude that is varied or adjusted while tone signal probe 303 is being swept in frequency, with an example variability or range of variability illustrated via arrow 306. In some embodiments, the rate of variation of amplitude of tone signal probe 303 is independent of the rate at which the masking probe 304 and tone signal probe 303 are frequency swept, although in other embodiments a relationship is contemplated, as will be explained in greater depth below. While performing frequency sweeping of the tone signal probe 303 and the masking probe 304, a fixed frequency ratio $r$ is maintained, indicated in FIG. 3A at 302 and simply as '$r$' elsewhere. In some embodiments, the fixed frequency ratio $r$ is given by $[F_s/F_c]$ where $1.0 \leq r \leq 1.5$, although other ratio values may be utilized without departing from the scope of the present disclosure. As illustrated, masking probe 304 and signal probe 303 are then swept 305, 308 simultaneously to higher frequencies while Bekesy-style user responses 307, 309 are recorded and then interpolated to generate curve 301.

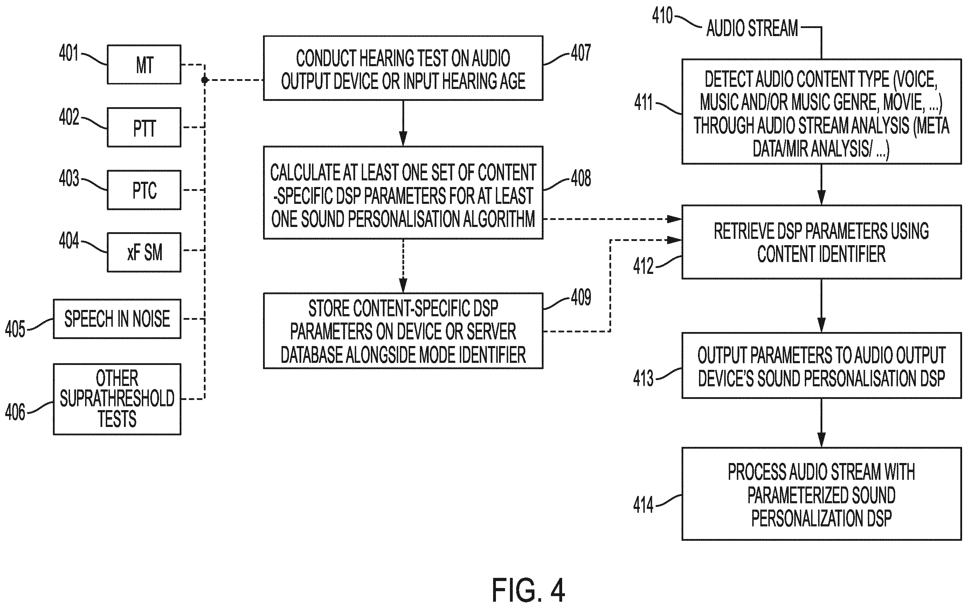

FIG. 4 illustrates an exemplary embodiment of the present disclosure in which content-specific, personalized audio replay is carried out on an audio output devices. First, a hearing test is conducted 407 on one of a plurality of audio output devices. Alternatively, a user may just input their age, which would then input a representative hearing profile based on their age. The hearing test may be provided by any one of a plurality of hearing test options, including but not limited to: a masked threshold test (MT test) 401, a pure tone threshold test (PTT test) 402, a psychophysical tuning curve test (PTC test) 403, a cross frequency simultaneous masking test (xF-SM) 404, a speech in noise test 405, or other suprathreshold test(s) 406.

Next, hearing test results are used to calculate 408 at least one set of audio content-specific DSP parameters

6

(also referred to herein as "content-specific" DSP parameters) for at least one sound personalization algorithm. The calculated DSP parameters for a given sound personalization algorithm may include, but are not limited to: ratio, threshold and gain values within a multiband dynamic processor, gain and limiter values for equalization DSPs, and/or parameter values common to other sound personalization DSPs (see, e.g., commonly owned US Patent No. 10,199,047 and US Patent Application No. 16/244,727). One or more of the DSP parameter calculations may be performed directly or indirectly, as is explained below. The content specific parameters are then stored 409 on the audio output device and/or on a server database alongside a content identifier.

In some embodiments, when an audio stream is playing 410, the audio content type may be identified through metadata associated with the audio stream. For example, the metadata may be contained within the audio file itself, or may be ascertained from the operating system of the audio output device. Various types of audio content may include: voice, video, music, or specific genres of music such as classical, rock, pop, jazz, etc. Alternatively or additionally, in some embodiments, other forms of audio signal analysis may be performed to identify audio content type, such as Music Information Retrieval (MIR), speech detection algorithms, or other forms of spectral analysis. After the audio content type has been identified or otherwise determined for the audio stream, content-specific DSP parameters are subsequently retrieved from the database using the audio content identifier as reference 412 and the parameters are then outputted to the device's sound personalization algorithm 413. The audio stream is then processed by the sound personalization algorithm 414.

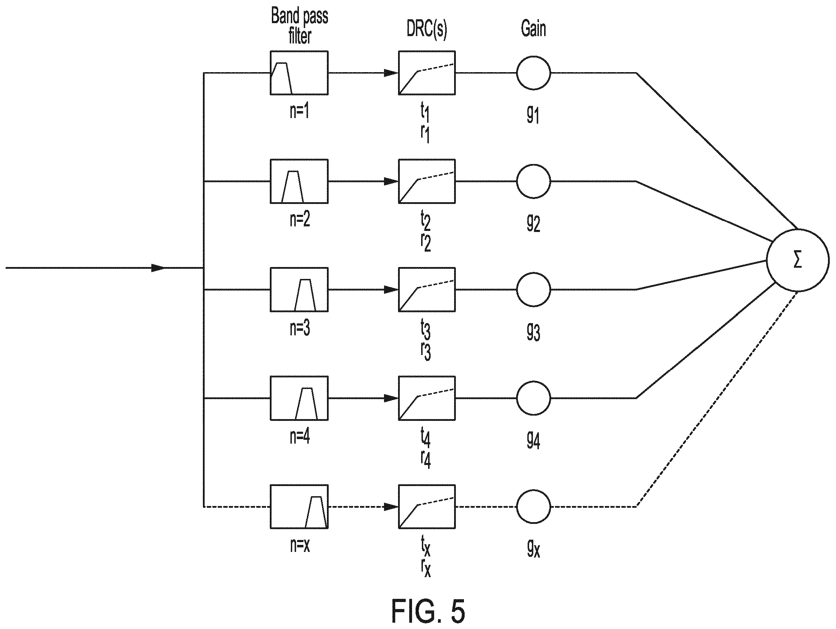

FIG. 5 illustrates an exemplary multiband dynamic range compressor, which may be used to personalize sound for an audio stream. Here, each subband (n=1, ..., x) contains at least variables threshold ($t_n$) and ratio ($r_n$) for the subband's dynamic range compressor and gain ($g_n$). Other circuitries may be used (see for example, commonly owned US Patent No. 10,199,047).

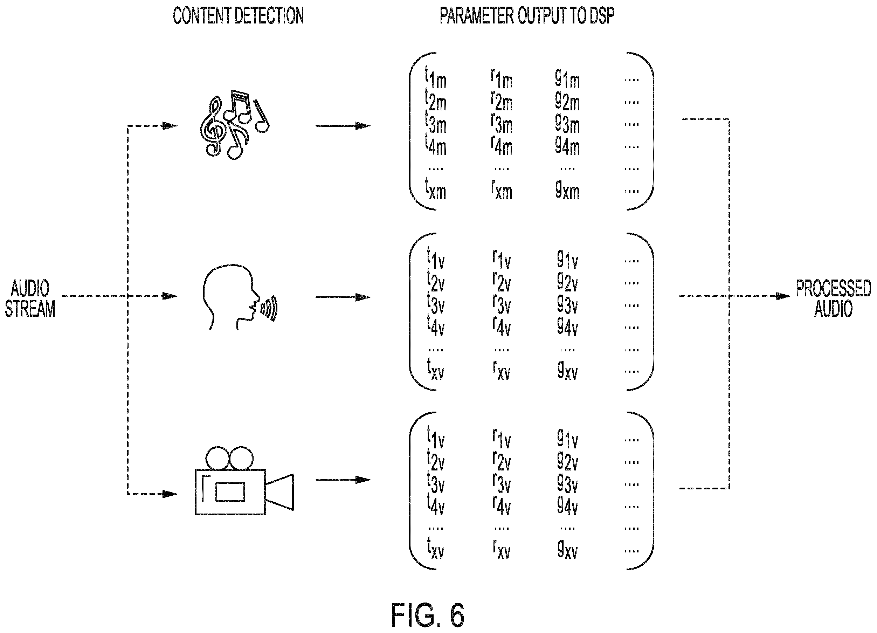

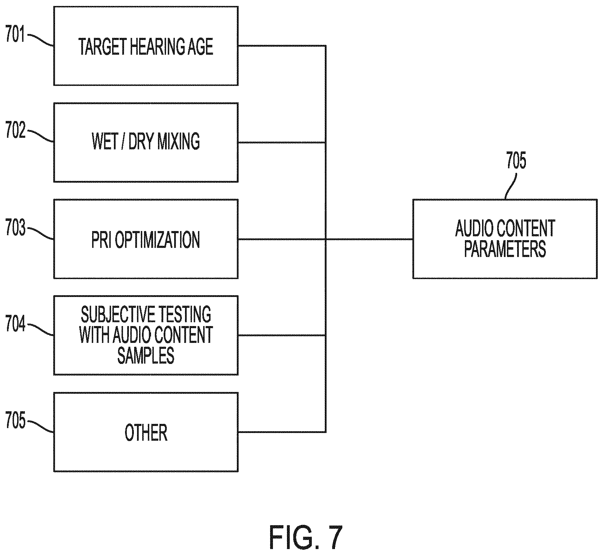

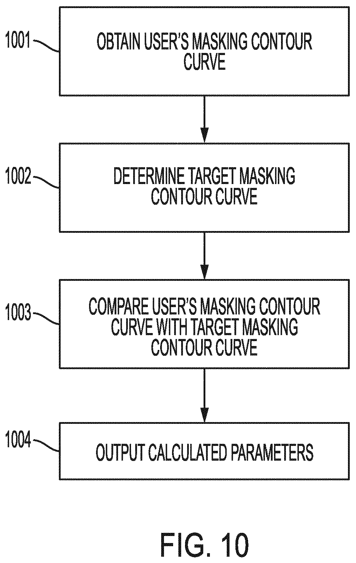

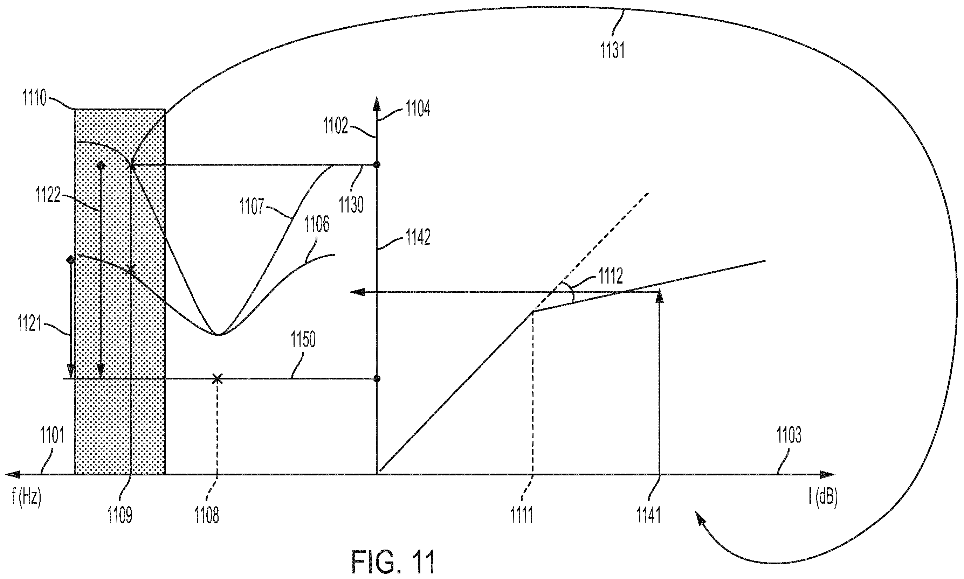

FIG. 6 further illustrates an exemplary method in which different parameter values are associated with various types of audio content. When the audio content-type is detected, these content-specific parameters are then outputted to the device's sound personalization algorithm and the audio stream is then processed accordingly. Content-specific parameters may be calculated according to a variety of methods, for example as illustrated in FIG. 7. For example, parameter calculation may be based on a scale of processing level via target hearing age 701 in which higher levels of compression are used for voice - which is then progressively scaled lower for movies and music. For telephone calls, users are often willing to tolerate higher levels of compression, and thus distortion - in order to improve the speech clarity of the call. This compression tolerance is reduced when consuming more complex audio content - that is content across a broader spectral range, and content that contains multiple audio layers of voice, background noise and music. The level of processing may be calculated using a target age approach (see e.g., FIGS. 10,11). For instance, when a user is 70 years old - parameters for voice may be calculated according to a target age curve of a 30 year old (i.e., this represents higher levels of compression needed for call clarity), whereas for music or video, a target age curve of a 50 year old may be used (i.e., a less harsh form of processing).

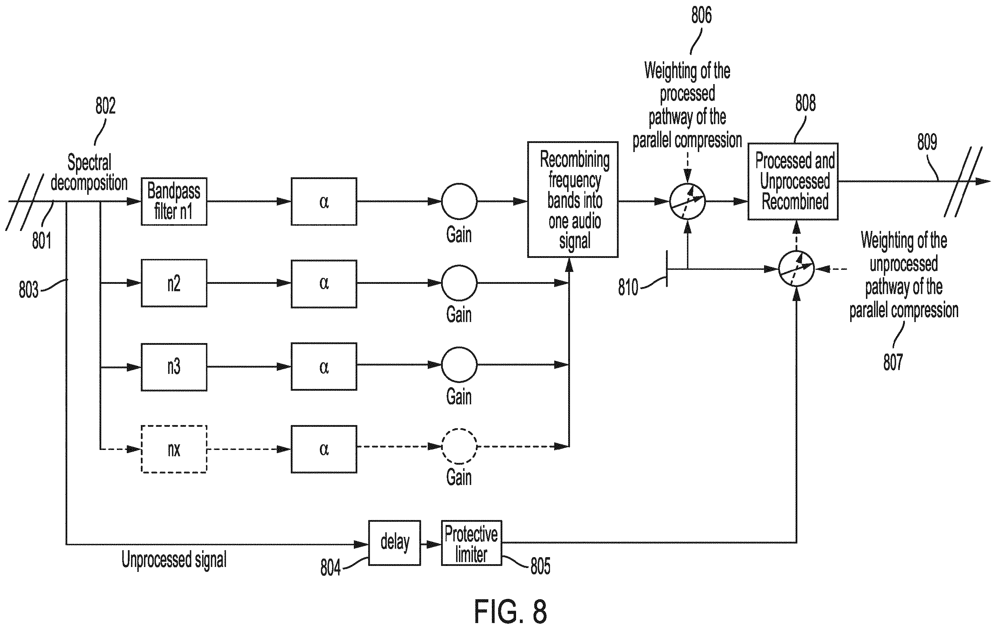

A wet/ dry mixing approach may also be used, as seen in FIG. 7 (702), FIG. 8, in which different ratios of wet and dry audio signals are selected for specific types of audio content, with higher levels of wet mix for audio content needing greater levels of processing. Specifically, a wide band audio signal is provided at processing input 801 and then divided into a first pathway (first signal pathway) 802 and a second pathway (second signal pathway) 803. In this example, the second pathway 803 is only subject to a delay 804 and a protective limiter 805. In contrast, in the first pathway 802, the audio signal from the control input 801 is spectrally decomposed and processed according to the configuration of FIG. 5. Each pathway 802, 803 may include a weighting operator 806 and 807, respectively. For example, these weighting operators 806 and 807 may be correlated by a common function that may be adjustable by a user by one single control variable 810. Then these pathways 802 and 803 are recombined according to their weighting factors in operator 808 and provided to the processing output 809.

Parallel compression provides the benefit of allowing the user to mix 'dry' unprocessed or slightly processed sound with 'wet' processed sound, enabling customization of processing based on subjective preference. For example, this enables hearing impaired users to use a high ratio of heavily processed sound relative to users with moderate to low hearing loss. Furthermore, by reducing the dynamic range of an audio signal by bringing up the softest sounds, rather than reducing the highest peaks, it provides audible detail to sound. The human ear is sensitive to loud sounds being suddenly reduced in volume, but less sensitive to soft sounds being increased in volume, and this mixing method takes advantage of this observation, resulting in a more natural sounding reduction in dynamic range compared with using a dynamic range compressor in isolation. Additionally, parallel compression is in particular useful for speech-comprehension and/or for listening to music with full, original timbre. To mix two different signal pathways requires that the signals in the pathways conform to phase linearity, or into the pathway's identical phase using phase distortion, or the pathway mixing modulator involves a phase correction network in order to prevent any phase cancellations upon summing the correlated signals to provide an audio signal to the control output.

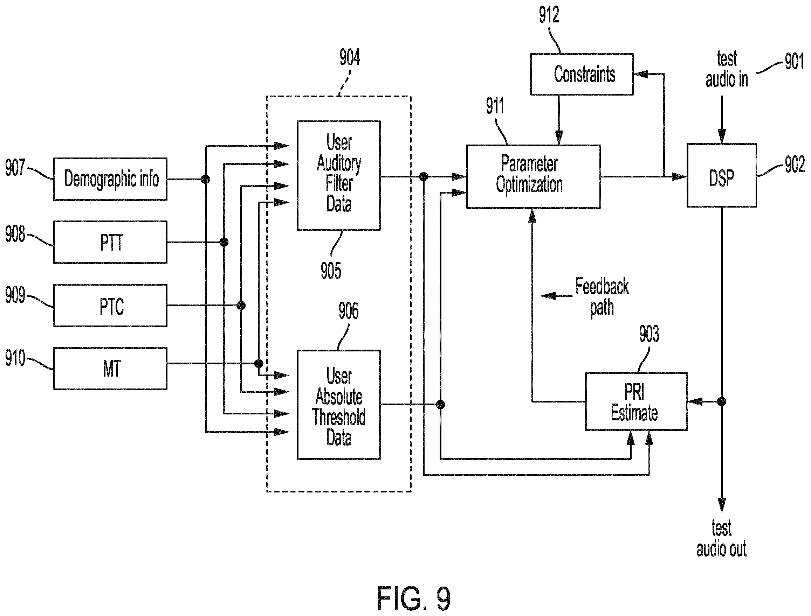

A PRI optimization approach may also be employed, see FIG. 7 (703), FIG. 9. DSP parameters in a multiband dynamic processor may be calculated by optimizing perceptually relevant information (e.g. perceptual entropy) through parameterization using user threshold and suprathreshold hearing data (see commonly owned US Patent No. US 10,455,335 and US Patent Application No. 16/538,541). Briefly, in order to optimally parameterize a multiband dynamic processor through perceptually relevant information, an audio sample 901, or body of audio samples representing a specific content type, is first processed by a parameterized multiband dynamics processor 902 (see also FIG. 5) and the perceptual entropy of the file is calculated 903 according to user threshold and suprathreshold hearing data 907. After calculation, the multiband dynamic processor is re-parameterized 911 according to a given set of parameter heuristics, derived from optimization, and from this - the audio sample(s) is reprocessed 902 and the PRI calculated 903. In other words, the multiband dynamics processor is configured to process the audio sample so that it has a higher PRI value for the particular listener, taking into account the individual listener's threshold and suprathreshold information 907. To this end, parameterization of the multiband dynamics processor is adapted to increase the PRI of the processed audio sample over the unprocessed audio sample. The parameters of the multiband dynamics processor are determined by an optimization process that uses PRI as its optimization criteria. Optionally, the PRI optimization process may be subject to constraints 912 to make the optimization process more efficient and worthwhile. This is performed by evaluating parameters within a given set of criteria to direct the end result to a level of signal manipulation that the end user deems tolerable (e.g. using EQ coloration criteria or against harmonic distortion and noise criteria to limit the optimization space, see jointly owned US Patent Application No. 16/538,541 ).

PRI can be calculated according to a variety of methods found. One such method, also called perceptual entropy, was developed by James D. Johnston at Bell Labs, generally comprising: transforming a sampled window of audio signal into the frequency domain, obtaining masking thresholds using psychoacoustic rules by performing critical band analysis, determining noise-like or tone-like regions of the audio signal, applying thresholding rules for the signal and then accounting for absolute hearing thresholds. Following this, the number of bits required to quantize the spectrum without introducing perceptible quantization error is determined. For instance, Painter & Spanias disclose a formulation for perceptual entropy in units of bits/s, which is closely related to ISO/IEC MPEG-1 psychoacoustic model 2 [Painter & Spanias, Perceptual Coding of Digital Audio, Proc. Of IEEE, Vol. 88, No. 4 (2000); see also generally Moving Picture Expert Group standards https://mpeg.chiariglione.org/standards].

Various optimization methods are possible to maximize the PRI of audio samples, depending on the type of the applied audio processing function such as the above-mentioned multiband dynamics processor. For example, a subband dynamic compressor may be parameterized by compression threshold, attack time, gain and compression ratio for each subband, and these parameters may be determined by the optimization process. In some cases, the effect of the multiband dynamics processor on the audio signal is nonlinear and an appropriate optimization technique such as gradient descend is required. The number of parameters that need to be determined may become large, e.g. if the audio signal is processed in many subbands and a plurality of parameters needs to be determined for each subband. In such cases, it may not be practicable to optimize all parameters simultaneously and a sequential approach for parameter optimization may be applied. Although sequential optimization procedures do not necessarily result in the optimum parameters, the obtained parameter values result in increased PRI over the unprocessed audio sample, thereby improving the listener's listening experience.

Other parameterization processes commonly known in the art may be used to calculate parameters based off user-generated threshold and suprathreshold information. For instance, common prescription techniques for linear and non-linear DSP may be employed. Well known procedures for linear hearing aid algorithms include POGO, NAL, and DSL. See, e.g., H. Dillon, Hearing Aids, 2nd Edition, Boomerang Press, 2012.

Fine tuning of any of the above-mentioned techniques may be estimated from manual fitting data. For instance, it is common in the art to fit a multiband dynamic processor according to series of subjective tests 704 given to a patient in which parameters are adjusted according to a patient's responses, e.g. a series of A/B tests, decision tree paradigms, 2D exploratory interface, in which the patient is asked which set of parameters subjectively sounds better. This testing ultimately guides the optimal parameterization of the DSP.

FIGS. 10 and 11 demonstrate one way of configuring the ratio and threshold parameters for a frequency band in a multi-band compression system (see, e.g., commonly owned applications EP18200368.1 and US16/201,839) based upon a target curve / target age (see also FIG. 4). Briefly, a user's masking contour curve is received 1001, a target masking curve is determined 1002, and is subsequently compared with the user masking contour curve 1001 in order to determine and output user-calculated DSP parameter sets 1004.

FIG. 11 combines the visualization of a user masking contour curve 1106 for a listener (listener) and a target masking contour curve 1107 of a probe tone 1150 (with the x-axis 1101 being frequency, and the y-axis 1102 being the sound level in dB SPL or HL) with an input/output graph of a compressor showing the input level 1103 versus the output level 1104 of a sound signal, in decibels relative to full scale (dB FS). The bisecting line in the input/output graph represents a 1:1 (unprocessed) output of the input signal with gain 1.

The parameters of the multi-band compression system in a frequency band are threshold 1111 and gain 1112. These two parameters are determined from the user masking contour curve 1406 for the listener and target masking contour curve 1107. The threshold 1111 and ratio 1112 must satisfy the condition that the signal-to-noise ratio 1121 (SNR) of the user masking contour curve 1106 at a given frequency 1109 is greater than the SNR 1122 of the target masking contour curve 1107 at the same given frequency 1109. Note that the SNR is herein defined as the level of the signal tone compared to the level of the masker noise. The broader the curve will be, the greater the SNR. The given frequency 1109 at which the SNRs 1121 and 1122 are calculated may be arbitrarily chosen, for example, to be beyond a minimum distance from the probe tone frequency 1408.

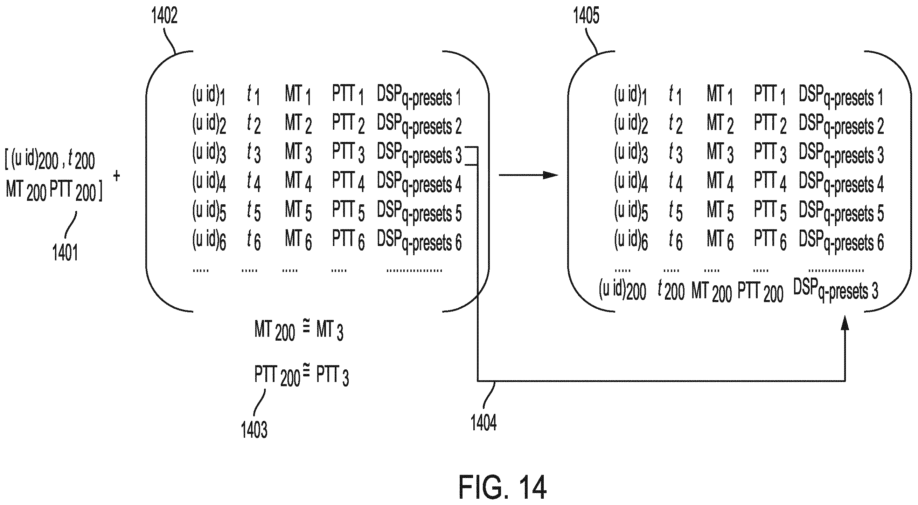

The sound level 1130 (in dB) of the target masking contour curve 1107 at a given frequency corresponds (see bent arrow 1131 in FIG. 14) to an input sound level 1141 entering the compression system. The objective is that the sound level 1142 outputted by the compression system will match the user masking contour curve 1106, i.e., that this sound level 1142 is substantially equal to the sound level (in dB) of the user masking contour curve 1106 at the given frequency 1109. This condition allows the derivation of the threshold 1111 (which has to be below the input sound level 1141) and the ratio 1112. In other words, input sound level 1141 and output sound level 1142 determine a reference point of the compression curve. As noted above, threshold 1111 must be selected to be lower than input sound level 1141 - if it is not, there will be no change, as below the threshold of the compressor, the system is linear). Once the threshold 1111 is selected, the ratio 1112 can be determined from the threshold and the reference point of the compression curve.

In the context of the present disclosure, a masking contour curve is obtained from a user hearing test. A target masking contour curve 1107 is interpolated from at least the user masking contour curve 1106 and a reference masking contour curve, representing the curve of a normal hearing individual. The target masking contour curve 1107 is preferred over a reference curve because fitting an audio signal to a reference curve is not necessarily optimal. Depending on the initial hearing ability of the listener, fitting the processing according to a reference curve may cause an excess of processing to spoil the quality of the signal. The objective is to process the signal in order to obtain a good balance between an objective benefit and a good sound quality.

The given frequency 1109 is then chosen. It may be chosen arbitrarily, e.g., at a certain distance from the tone frequency 1108. The corresponding sound levels of the listener and target masking contour curves are determined at this given frequency 1109. The value of these sound levels may be determined graphically on the y-axis 1102.

The right panel in FIG. 11 (see the contiguous graph) illustrates a hard knee DRC, with a threshold 1111 and a ratio 1112 as parameters that need to be determined. An input sound signal having a sound level 1130/1141 at a given frequency 1109 enters the compression system (see bent arrow 1131 indicating correspondence between 1130/1141). The sound signal should be processed by the DRC in such a way that the outputted sound level is the sound level of the user masking contour curve 1106 at the given frequency 1109. The threshold 1111 should not exceed the input sound level 1141, otherwise compression will not occur. Multiple sets of threshold and ratio parameters are possible. Preferred sets can be selected depending on a fitting algorithm and/or objective fitting data that have proven to show the most benefit in terms of sound quality. For example, either one of the threshold 1111 and ratio 1112 may be chosen to have a default value, and the respective other one of the parameters can then be determined by imposing the above-described condition.

In some embodiments, content-specific DSP parameter sets may be calculated indirectly from a user hearing test based on preexisting entries or anchor points in a server database. An anchor point comprises a typical hearing profile constructed based at least in part on demographic information, such as age and sex, in which DSP parameter sets are calculated and stored on the server to serve as reference markers. Indirect calculation of DSP parameter sets bypasses direct parameter sets calculation by finding the closest matching hearing profile(s) and importing (or interpolating) those values for the user.

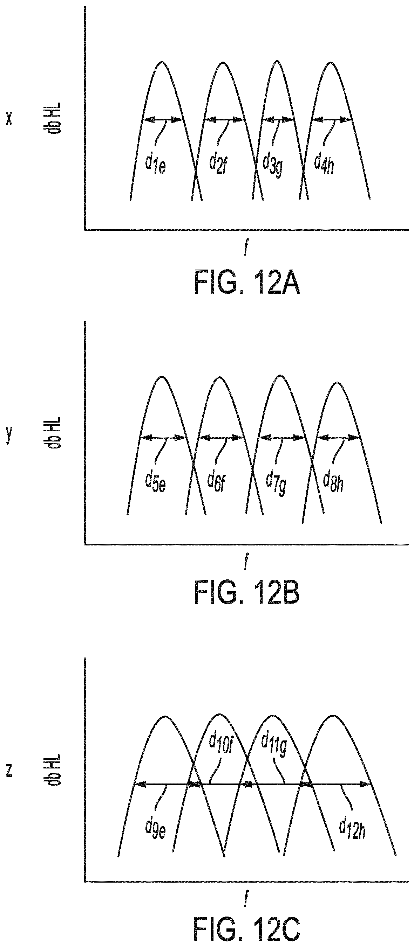

FIGS. 12A-C illustrate three conceptual user masked threshold (MT) curves for users x, y, and z, respectively. The MT curves are centered at frequencies a-d, each with curve width d, which may be used to as a metric to measure the similarity between user hearing data. For instance, a root mean square difference calculation may be used to determine if user y's hearing data is more similar to user x's or user z's, e.g. by calculating:

$$(\sqrt{(d5a - d1a)^2 + (d6b - d2b)^2 \ldots} < \sqrt{(d5a - d9a)^2 + (d6b - d10b)^2 \ldots}$$

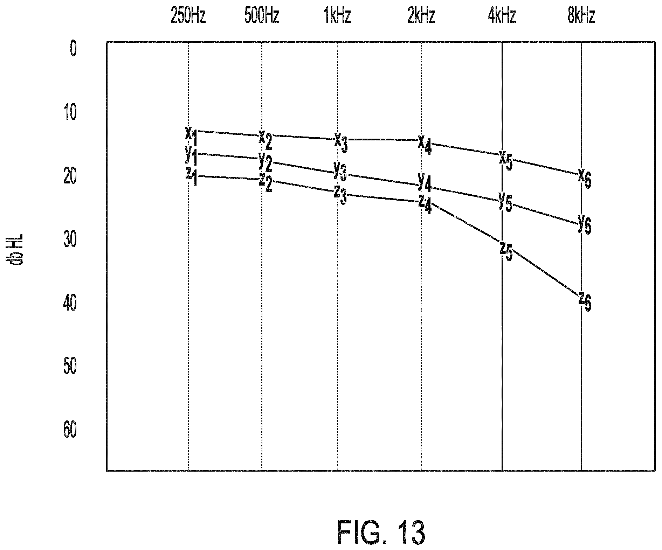

FIG. 13 illustrates three conceptual audiograms of users x, y and z, each with pure tone threshold values 1-5. Similar to above, a root mean square difference measurement may also be used to determine, for example, if user y's hearing data is more similar to user x's than user z's, e.g., by calculating:

$$(\sqrt{(y1 - x1)^2 + (y2 - x2)^2 \ldots} < \sqrt{(y1 - z1)^2 + (y2 - z2)^2 \ldots})$$

As would be appreciated by one of ordinary skill in the art, other methods may be used to quantify similarity amongst user hearing profile graphs, where the other methods can include, but are not limited to, methods such as a Euclidean distance measurements, e.g. $((y1 - x1) + (y2 - x2) \ldots > (y1 - x1) + (y2 - x2)) \ldots$ or other statistical methods known in the art. For indirect DSP parameter set calculation, then, the closest matching hearing profile(s) between a user and other preexisting database entries or anchor points can then be used.

FIG. 14 illustrates an exemplary embodiment for calculating sound personalization parameter sets for a given algorithm based on preexisting entries and/or anchor points. Here, server database entries 1402 are surveyed to find the best fit(s) with user hearing data input 1401, represented as $MT_{200}$ and $PTT_{200}$ for $(u\_id)_{200}$. This may be performed by the statistical techniques illustrated in FIGS. 12 and 13. In the example of FIG. 14, $(u\_id)_{200}$ hearing data best matches $MT_3$ and $PTT_3$ data 1403. To this extent, $(u\_id)_3$ associated parameter sets, $[DSP_{q\text{-}param\ 3}]$, are then used for the $(u\_id)_{200}$ parameter set entry, illustrated here as $[(u\_id)_{200}, t_{200}, MT_{200}, PTT_{200}, DSP_{q\text{-}param}\ 3]$.

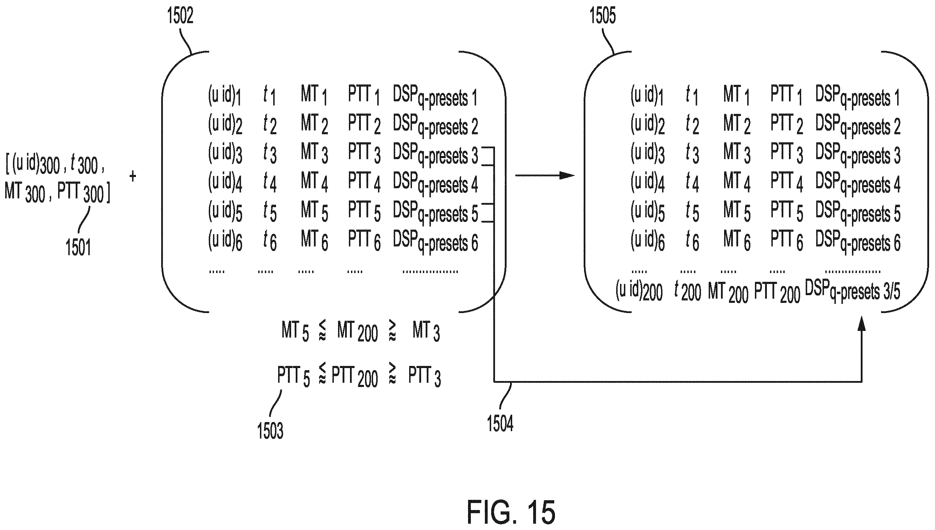

FIG. 15 illustrates an exemplary embodiment for calculating sound personalization parameter sets for a given algorithm based on preexisting entries or anchor points, according to aspects of the present disclosure. Here, server database entries 1502 are employed to interpolate 1504 between two nearest fits 1500 with user hearing data input 1501 $MT_{300}$ and $PT_{300}$ for $(u\_id)_{300}$. In this example, the $(u\_id)_{300}$ hearing data fits nearest between: $MT_5 \lessgtr MT_{200} \gtrless MT_3$ and $PTT_5 \lessgtr PTT_{200} \gtrless PTT_3$ 1503. To this extent, $(u\_id)_3$ and $(u\_id)_5$ parameter sets are interpolated to generate a new set of parameters for the $(u\_id)_{300}$ parameter set entry, represented here as $[(u\_id)_{200}, t_{200}, MT_{200}, PTT_{200}, DSP_{q\text{-}param3/5}]$ 1505. In a further embodiment, interpolation may be performed across multiple data entries to calculate sound personalization parameters.

DSP parameter sets may be interpolated linearly, e.g., a DRC ratio value of 0.7 for user 5 $(u\_id)_5$ and 0.8 for user 3 $(u\_id)_3$ would be interpolated as 0.75 for user 200 $(u\_id)_{200}$ in the example of FIG. 12, assuming user 200's hearing data was halfway in-between that of users 3 and 5. In some embodiments, DSP parameter sets may also be interpolated non-linearly, for instance using a squared function, e.g. a DRC ratio value of 0.6 for user 5 and 0.8 for user 3 would be non-linearly interpolated as 0.75 for user 200 in the example of FIG. 12.

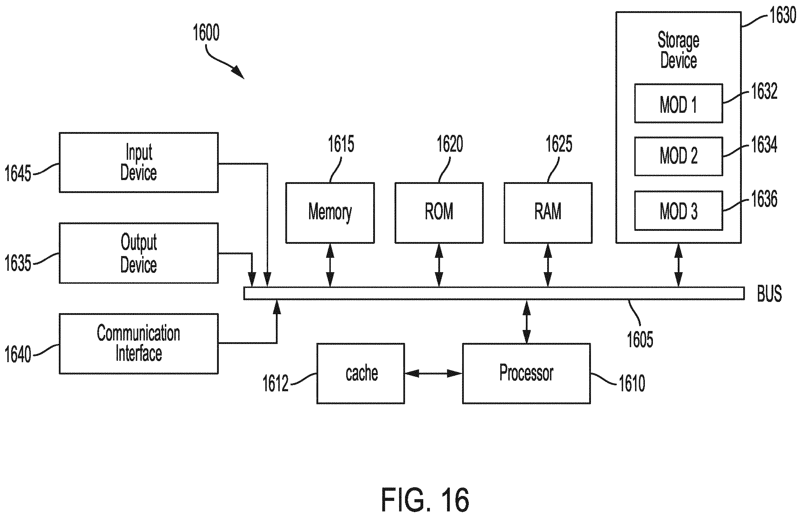

FIG. 16 shows an example of computing system 1600, which can be for example any computing device making up (e.g., mobile device 100, server, etc.) or any component thereof in which the components of the system are in communication with each other using connection 1605. Connection 1605 can be a physical connection via a bus, or a direct connection into processor 1610, such as in a chipset architecture. Connection 1605 can also be a virtual connection, networked connection, or logical connection.

In some embodiments computing system 1600 is a distributed system in which the functions described in this disclosure can be distributed within a datacenter, multiple datacenters, a peer network, etc. In some embodiments, one or more of the described system components represents many such components each performing some or all of the function for which the component is described. In some embodiments, the components can be physical or virtual devices.

Example system 1600 includes at least one processing unit (CPU or processor) 1610 and connection 1605 that couples various system components including system memory 1615, such as read only memory (ROM) 1620 and random access memory (RAM) 1625 to processor 1610. Computing system 1600 can include a cache of high-speed memory 1612 connected directly with, in close proximity to, or integrated as part of processor 1610.

Processor 1610 can include any general-purpose processor and a hardware service or software service, such as services 1632, 1634, and 1636 stored in storage device 1630, configured to control processor 1610 as well as a special-purpose processor where software instructions are incorporated into the actual processor design. Processor 1610 may essentially be a completely self-contained computing system, containing multiple cores or processors, a bus, memory controller, cache, etc. A multi-core processor may be symmetric or asymmetric.

To enable user interaction, computing system 1600 includes an input device 1645, which can represent any number of input mechanisms, such as a microphone for speech, a touch-sensitive screen for gesture or graphical input, keyboard, mouse, motion input, speech, etc. Computing system 1600 can also include output device 1635, which can be one or more of a number of output mechanisms known to those of skill in the art. In some instances, multimodal systems can enable a user to provide multiple types of input/output to communicate with computing system 1600. Computing system 1600 can include communications interface 1640, which can generally govern and manage the user input and system output. There is no restriction on operating on any particular hardware arrangement and therefore the basic features here may easily be substituted for improved hardware or firmware arrangements as they are developed.

Storage device 1630 can be a non-volatile memory device and can be a hard disk or other types of computer readable media which can store data that are accessible by a computer, flash memory cards, solid state memory devices, digital versatile disks, cartridges, random access memories (RAMs), read only memory (ROM), and/or some combination of these devices.

The storage device 1630 can include software services, servers, services, etc., that when the code that defines such software is executed by the processor 1610, it causes the system to perform a function. In some embodiments, a hardware service that performs a particular function can include the software component stored in a computer-readable medium in connection with the necessary hardware components, such as processor 1610, connection 1605, output device 1635, etc., to carry out the function.

The presented technology offers an efficient and accurate way to personalize audio replay automatically for a variety of audio content types. It is to be understood that the present disclosure contemplates numerous variations, options, and alternatives. For clarity of explanation, in some instances the present technology may be presented as including individual functional blocks including functional blocks comprising devices, device components, steps or routines in a method embodied in software, or combinations of hardware and software.

Methods according to the above-described examples can be implemented using computer-executable instructions that are stored or otherwise available from computer readable media. Such instructions can comprise, for example, instructions and data which cause or otherwise configure a general-purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example. The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A method (400) for processing an audio stream, the method comprising:

   storing a user hearing profile;
   calculating (408, 705) at least one set of audio content-specific DSP, digital signal processing, parameters for each of one or more sound personalization algorithms, the calculation of the content-specific DSP parameters based on at least the user hearing profile, wherein the calculation (408, 705) of the content-specific DSP parameters further comprises

   calculating (702) one or more wet mixing parameters and dry mixing parameters to optimize the content-specific DSP parameters for the different types of specific content;
   associating one or more of the calculated sets of content-specific DSP parameters with a content-identifier for the specific content;
   in response to the audio stream on an audio output device (1600), analyzing (411) the audio stream to determine at least one content type of the audio stream; and
   based on the at least one determined content type of the audio stream, outputting (413) corresponding content-specific DSP parameters to the audio output device (1600) for processing the audio stream on the audio output device (1600) by using a given sound personalization algorithm parameterized by the corresponding content-specific DSP parameters, wherein the corresponding content-specific DSP parameters are outputted based at least in part on their content-identifier.

2. The method of claim 1, further comprising processing (414), on the audio output device (1600), the audio stream by using a given sound personalization algorithm parameterized by the corresponding content-specific DSP parameters.

3. The method of claim 1 or 2, wherein the content-identifier further indicates the given sound personalization algorithm for which a given set of content-specific DSP parameters was calculated.

4. The method of any previous claim, wherein the calculation (408, 705) of the content-specific DSP parameters further comprises analyzing (703) perceptually relevant information (PRI) to optimize a PRI value provided by the content-specific DSP parameters for the different types of specific content.

5. The method of any previous claim, wherein the user hearing profile is generated by conducting (407) at least one hearing test on the audio output device (1600) of a user.

6. The method of claim 5, wherein the hearing test is one or more of a masked threshold test, MT test (401, 910), a pure tone threshold test, PTT test (402, 908), a psychophysical tuning curve test, PTC test (403, 909), or a cross frequency simultaneous masking test, xF-SM test (404).

7. The method of any previous claim, wherein the user hearing profile is generated at least in part by analyzing a user input of demographic information (907) to thereby interpolate a representative hearing profile.

8. The method of claim 7, wherein the user input of demographic information (907) includes an age of the user.

9. The method of any previous claim, wherein:

   the sound personalization algorithm is a multiband dynamic processor (902); and
   the content-specific DSP parameters include one or more ratio values and gain values.

10. The method of any previous claim, wherein:

    the sound personalization algorithm is an equalization DSP; and
    the content-specific DSP parameters include one or more gain values and limiter values.

11. The method of any previous claim, wherein the content type of the audio stream is determined by analyzing one or more metadata portions associated with the audio stream.

12. The method of claim 11, wherein the one or more metadata portions are extracted from the audio stream.

13. The method of claim 11, wherein the one or more metadata portions are calculated locally by an operating system of the audio output device (1600).

14. The method of claim 11 or 12 or 13, wherein the content types include voice, video, music, and specific music genres.

15. The method of any previous claim, wherein the audio output device (1600) is one of a mobile phone, a smart speaker, a television, headphones, or hearables.

16. The method of any previous claim, wherein the at least one set of content-specific DSP parameters is stored on a remote server (1600) or locally on the audio output device (1600).

17. The method of any previous claim, wherein the content type of the audio stream is determined by performing a Music Information Retrieval (MIR) calculation.

18. The method of any previous claim, wherein the content type of the audio stream is determined by performing a spectral analysis calculation on the audio stream or providing the audio stream as input to a speech detection algorithm.

19. Apparatus (1600) for processing an audio stream, the apparatus comprising:

    a processing unit (1610); and
    a memory (1615) for storing a user hearing profile;
    the processing unit (1610) configured for:
    calculating at least one set of audio content-specific DSP, digital signal processing, parameters for each of one or more sound personalization algorithms, the calculation of the content-specific DSP parameters based on at least the user hearing profile, wherein the calculation (408, 705) of the content-specific DSP parameters further comprises

       calculating (702) one or more wet mixing parameters and dry mixing parameters to optimize the content-specific DSP parameters for the different types of specific content;
associating one or more of the calculated sets of content-specific DSP parameters with a content-identifier for the specific content;

in response to the audio stream on an audio output device (1600), analyzing the audio stream to determine at least one content type of the audio stream; and based on the at least one determined content type of the audio stream, outputting corresponding content-specific DSP parameters to the audio output device (1600) for processing the audio stream on the audio output device (1600) by using a given sound personalization algorithm parameterized by the corresponding content-specific DSP parameters, wherein the corresponding content-specific DSP parameters are outputted based at least in part on their content-identifier.

**Patentansprüche**

1. Verfahren (400) zum Verarbeiten eines Audiostroms, wobei das Verfahren Folgendes aufweist:

Speichern eines Benutzerhörprofils;
Berechnen (408, 705) mindestens eines Satzes von audioinhaltsspezifischen DSP-, Digitalsignalverarbeitungs-, Parametern für jeden von einem oder mehreren Klangpersonalisierungsalgorithmen, wobei die Berechnung der inhaltsspezifischen DSP-Parameter zumindest auf dem Benutzerhörprofil basiert, wobei die Berechnung (408, 705) der inhaltsspezifischen DSP-Parameter ferner Folgendes aufweist:
Berechnen (702) eines oder mehrerer Nassmischparameter und Trockenmischparameter, zum Optimieren der inhaltsspezifischen DSP-Parameter für die verschiedenen Typen von spezifischem Inhalt;

Assoziieren eines oder mehrerer der berechneten Sätze von inhaltsspezifischen DSP-Parametern mit einer Inhaltskennung für den spezifischen Inhalt;
Analysieren (411) des Audiostroms zum Bestimmen mindestens eines Inhaltstyps des Audiostroms als Reaktion auf den Audiostrom auf einer Audioausgabevorrichtung (1600); und
Ausgeben (413) von entsprechenden inhaltsspezifischen DSP-Parametern an die Audioausgabevorrichtung (1600) zum Verarbeiten des Audiostroms auf der Audioausgabevorrichtung (1600) unter Verwendung eines gegebenen Klangpersonalisierungsalgorithmus, der durch die entsprechenden inhaltsspezifischen DSP-Parameter parametrisiert ist, auf der Grundlage von dem mindestens einen bestimmten Inhaltstyp des Audiostroms, wobei die entsprechenden inhaltsspezifischen DSP-Parameter zumindest teilweise auf der Grundlage ihrer Inhaltskennung ausgegeben werden.

2. Verfahren nach Anspruch 1, das ferner das Verarbeiten (414) des Audiostroms auf der Audioausgabevorrichtung (1600) unter Verwendung eines gegebenen Klangpersonalisierungsalgorithmus aufweist, der durch die entsprechenden inhaltsspezifischen DSP-Parameter parametrisiert ist.

3. Verfahren nach Anspruch 1 oder 2, wobei die Inhaltskennung ferner den gegebenen Klangpersonalisierungsalgorithmus angibt, für den ein gegebener Satz von inhaltsspezifischen DSP-Parametern berechnet wurde.

4. Verfahren nach einem der vorhergehenden Ansprüche, wobei die Berechnung (408, 705) der inhaltsspezifischen DSP-Parameter ferner das Analysieren (703) von wahrnehmungsrelevanten Informationen (PRI) aufweist, um einen PRI-Wert zu optimieren, der durch die inhaltsspezifischen DSP-Parameter für die verschiedenen Typen von spezifischem Inhalt bereitgestellt wird.

5. Verfahren nach einem der vorhergehenden Ansprüche, wobei das Benutzerhörprofil durch Durchführen (407) mindestens eines Hörtests auf der Audioausgabevorrichtung (1600) eines Benutzers erzeugt wird.

6. Verfahren nach Anspruch 5, wobei der Hörtest einer oder mehrere von einem maskierten Schwellenwerttest, MT-Test (401, 910), einem reinen Tonschwellenwerttest, PTT-Test (402, 908), einem psychophysischen Abstimmkurventest, PTC-Test (403, 909), oder einem gleichzeitigen Kreuzfrequenzmaskierungstest, xF-SM-Test (404), ist.

7. Verfahren nach einem der vorhergehenden Ansprüche, wobei das Benutzerhörprofil mindestens teilweise durch Analysieren einer Benutzereingabe von demografischen Informationen (907) erzeugt wird, um dadurch ein repräsentatives Hörprofil zu interpolieren.

8. Verfahren nach Anspruch 7, wobei die Benutzereingabe von demografischen Informationen (907) ein Alter des Benutzers enthält.

9. Verfahren nach einem der vorhergehenden Ansprüche, wobei:

> der Klangpersonalisierungsalgorithmus ein dynamischer Mehrbandprozessor (902) ist; und
> die inhaltsspezifischen DSP-Parameter einen oder mehrere Verhältniswerte und Verstärkungswerte enthalten.

10. Verfahren nach einem der vorhergehenden Ansprüche, wobei:

> der Klangpersonalisierungsalgorithmus ein Entzerrungs-DSP ist; und
> die inhaltsspezifischen DSP-Parameter einen oder mehrere Verstärkungswerte und Begrenzungswerte enthalten.

11. Verfahren nach einem der vorhergehenden Ansprüche, wobei der Inhaltstyp des Audiostroms durch Analysieren eines oder mehrerer Metadatenabschnitte, die dem Audiostrom zugeordnet sind, bestimmt wird.

12. Verfahren nach Anspruch 11, wobei der eine oder die mehreren Metadatenabschnitte aus dem Audiostrom extrahiert werden.

13. Verfahren nach Anspruch 11, wobei der eine oder die mehreren Metadatenabschnitte lokal durch ein Betriebssystem der Audioausgabevorrichtung (1600) berechnet werden.

14. Verfahren nach Anspruch 11 oder 12 oder 13, wobei die Inhaltstypen Sprache, Video, Musik und spezifische Musikgenres enthalten.

15. Verfahren nach einem der vorhergehenden Ansprüche, wobei die Audioausgabevorrichtung (1600) eines von einem Mobiltelefon, einem intelligenten Lautsprecher, einem Fernseher, Kopfhörern oder Hörgeräten ist.

16. Verfahren nach einem der vorhergehenden Ansprüche, wobei der mindestens eine Satz von inhaltsspezifischen DSP-Parametern auf einem entfernten Server (1600) oder lokal auf der Audioausgabevorrichtung (1600) gespeichert wird.

17. Verfahren nach einem der vorhergehenden Ansprüche, wobei der Inhaltstyp des Audiostroms durch Durchführen einer Musikinformationsabrufberechnung (MIR-Berechnung) bestimmt wird.

18. Verfahren nach einem der vorhergehenden Ansprüche, wobei der Inhaltstyp des Audiostroms durch Durchführen einer Spektralanalyseberechnung an dem Audiostrom oder Bereitstellen des Audiostroms als Eingabe für einen Spracherkennungsalgorithmus bestimmt wird.

19. Vorrichtung (1600) zum Verarbeiten eines Audiostroms, wobei die Vorrichtung Folgendes aufweist:

> eine Verarbeitungseinheit (1610); und
> einen Speicher (1615) zum Speichern eines Benutzerhörprofils;
> wobei die Verarbeitungseinheit (1610) zu Folgendem konfiguriert ist:
>
>> Berechnen mindestens eines Satzes von audioinhaltsspezifischen DSP-, Digitalsignalverarbeitungs-, Parametern für jeden von einem oder mehreren Klangpersonalisierungsalgorithmen, wobei die Berechnung der inhaltsspezifischen DSP-Parameter zumindest auf dem Benutzerhörprofil basiert, wobei die Berechnung (408, 705) der inhaltsspezifischen DSP-Parameter ferner Folgendes aufweist:
>> Berechnen (702) eines oder mehrerer Nassmischparameter und Trockenmischparameter, zum Optimieren der inhaltsspezifischen DSP-Parameter für die verschiedenen Typen von spezifischem Inhalt;
>> Assoziieren eines oder mehrerer der berechneten Sätze von inhaltsspezifischen DSP-Parametern mit einer Inhaltskennung für den spezifischen Inhalt;
>> Analysieren des Audiostroms zum Bestimmen mindestens eines Inhaltstyps des Audiostroms als Reaktion auf den Audiostrom auf einer Audioausgabevorrichtung (1600); und

Ausgeben von entsprechenden inhaltsspezifischen DSP-Parametern an die Audioausgabevorrichtung (1600) zum

**EP 3 896 998 B1**

Verarbeiten des Audiostroms auf der Audioausgabevorrichtung (1600) unter Verwendung eines gegebenen Klangpersonalisierungsalgorithmus, der durch die entsprechenden inhaltsspezifischen DSP-Parameter parametrisiert ist, auf der Grundlage von dem mindestens einen bestimmten Inhaltstyp des Audiostroms, wobei die entsprechenden inhaltsspezifischen DSP-Parameter zumindest teilweise auf der Grundlage ihrer Inhaltskennung ausgegeben werden.

**Revendications**

1. Procédé (400) de traitement d'un flux audio, le procédé comprenant :

   le stockage d'un profil auditif d'utilisateur ;
   le calcul (408, 705) d'au moins un ensemble de paramètres de traitement de signal numérique, DSP, spécifiques à un contenu audio pour chacun d'un ou plusieurs algorithmes de personnalisation de son, le calcul des paramètres DSP spécifiques à un contenu étant basé sur au moins le profil auditif d'utilisateur, dans lequel le calcul (408, 705) des paramètres DSP spécifiques à un contenu comprend en outre
   le calcul (702) d'un ou plusieurs paramètres de mélange humide et paramètres de mélange sec pour optimiser les paramètres DSP spécifiques à un contenu pour les différents types de contenu spécifique ;
   l'association d'un ou plusieurs des ensembles calculés de paramètres DSP spécifiques à un contenu à un identifiant de contenu pour le contenu spécifique ;
   en réponse au flux audio sur un dispositif de sortie audio (1600), l'analyse (411) du flux audio pour déterminer au moins un type de contenu du flux audio ; et
   sur la base de l'au moins un type de contenu déterminé du flux audio, la sortie (413) de paramètres DSP spécifiques à un contenu correspondants vers le dispositif de sortie audio (1600) pour traiter le flux audio sur le dispositif de sortie audio (1600) en utilisant un algorithme de personnalisation de son donné paramétré par les paramètres DSP spécifiques à un contenu correspondants, dans lequel les paramètres DSP spécifiques à un contenu correspondants sont sortis sur la base au moins en partie de leur identifiant de contenu.

2. Procédé selon la revendication 1, comprenant en outre le traitement (414), sur le dispositif de sortie audio (1600), du flux audio en utilisant un algorithme de personnalisation de son donné paramétré par les paramètres DSP spécifiques à un contenu correspondants.

3. Procédé selon la revendication 1 ou 2, dans lequel l'identifiant de contenu indique en outre l'algorithme de personnalisation de son donné pour lequel un ensemble donné de paramètres DSP spécifiques à un contenu a été calculé.

4. Procédé selon l'une quelconque des revendications précédentes, dans lequel le calcul (408, 705) des paramètres DSP spécifiques à un contenu comprend en outre l'analyse (703) d'informations pertinentes perceptuellement (PRI) pour optimiser une valeur PRI fournie par les paramètres DSP spécifiques à un contenu pour les différents types de contenu spécifique.

5. Procédé selon l'une quelconque des revendications précédentes, dans lequel le profil auditif d'utilisateur est généré en effectuant (407) au moins un test auditif sur le dispositif de sortie audio (1600) d'un utilisateur.

6. Procédé selon la revendication 5, dans lequel le test auditif est un ou plusieurs parmi un test de seuil masqué, test MT (401, 910), un test de seuil de tonalité pure, test PTT (402, 908), un test de courbe d'accord psychophysique, test PTC (403, 909), ou un test de masquage simultané à fréquence croisée, test xF-SM (404).

7. Procédé selon l'une quelconque des revendications précédentes, dans lequel le profil auditif d'utilisateur est généré au moins en partie en analysant une entrée utilisateur d'informations démographiques (907) pour ainsi interpoler un profil auditif représentatif.

8. Procédé selon la revendication 7, dans lequel l'entrée utilisateur d'informations démographiques (907) comprend un âge de l'utilisateur.

9. Procédé selon l'une quelconque des revendications précédentes, dans lequel :

   l'algorithme de personnalisation de son est un processeur dynamique multibande (902) ; et

les paramètres DSP spécifiques à un contenu comprennent une ou plusieurs valeurs de rapport et valeurs de gain.

10. Procédé selon l'une quelconque des revendications précédentes, dans lequel :

l'algorithme de personnalisation de son est un DSP d'égalisation ; et
les paramètres DSP spécifiques à un contenu comprennent une ou plusieurs valeurs de gain et valeurs de limiteur.

11. Procédé selon l'une quelconque des revendications précédentes, dans lequel le type de contenu du flux audio est déterminé en analysant une ou plusieurs parties de métadonnées associées au flux audio.

12. Procédé selon la revendication 11, dans lequel les une ou plusieurs parties de métadonnées sont extraites du flux audio.

13. Procédé selon la revendication 11, dans lequel les une ou plusieurs parties de métadonnées sont calculées localement par un système d'exploitation du dispositif de sortie audio (1600).

14. Procédé selon la revendication 11 ou 12 ou 13, dans lequel les types de contenu comprennent la voix, la vidéo, la musique et des genres musicaux spécifiques.

15. Procédé selon l'une quelconque des revendications précédentes, dans lequel le dispositif de sortie audio (1600) est l'un d'un téléphone mobile, d'un haut-parleur intelligent, d'une télévision, d'écouteurs ou d'écouteurs.

16. Procédé selon l'une quelconque des revendications précédentes, dans lequel l'au moins un ensemble de paramètres DSP spécifiques à un contenu est stocké sur un serveur distant (1600) ou localement sur le dispositif de sortie audio (1600).

17. Procédé selon l'une quelconque des revendications précédentes, dans lequel le type de contenu du flux audio est déterminé en effectuant un calcul de récupération d'informations musicales (MIR).

18. Procédé selon l'une quelconque des revendications précédentes, dans lequel le type de contenu du flux audio est déterminé en effectuant un calcul d'analyse spectrale sur le flux audio ou en fournissant le flux audio en tant qu'entrée à un algorithme de détection de parole.

19. Appareil (1600) de traitement d'un flux audio, l'appareil comprenant :

une unité de traitement (1610) ; et
une mémoire (1615) pour stocker un profil auditif d'utilisateur ;
l'unité de traitement (1610) étant configurée pour :

calculer au moins un ensemble de paramètres de traitement de signal numérique, DSP, spécifiques à un contenu audio pour chacun d'un ou plusieurs algorithmes de personnalisation de son, le calcul des paramètres DSP spécifiques à un contenu étant basé sur au moins le profil auditif d'utilisateur, dans lequel le calcul (408, 705) des paramètres DSP spécifiques à un contenu comprend en outre
le calcul (702) d'un ou plusieurs paramètres de mélange humide et paramètres de mélange sec pour optimiser les paramètres DSP spécifiques à un contenu pour les différents types de contenu spécifique ;
associer un ou plusieurs des ensembles calculés de paramètres DSP spécifiques à un contenu à un identifiant de contenu pour le contenu spécifique ;
en réponse au flux audio sur un dispositif de sortie audio (1600), analyser le flux audio pour déterminer au moins un type de contenu du flux audio ; et

sur la base de l'au moins un type de contenu déterminé du flux audio, sortir des paramètres DSP spécifiques à un contenu correspondants vers le dispositif de sortie audio (1600) pour traiter le flux audio sur le dispositif de sortie audio (1600) en utilisant un algorithme de personnalisation de son donné paramétré par les paramètres DSP spécifiques à un contenu correspondants, dans lequel les paramètres DSP spécifiques à un contenu correspondants sont sortis sur la base au moins en partie de leur identifiant de contenu.

FIG. 1A

FIG. 1B

FIG. 2A

FIG. 2B

FIG. 3A

FIG. 3B

FIG. 3C

FIG. 4

- 401 MT
- 402 PTT
- 403 PTC
- 404 xF SM
- 405 SPEECH IN NOISE
- 406 OTHER SUPRATHRESHOLD TESTS

407 CONDUCT HEARING TEST ON AUDIO OUTPUT DEVICE OR INPUT HEARING AGE

408 CALCULATE AT LEAST ONE SET OF CONTENT-SPECIFIC DSP PARAMETERS FOR AT LEAST ONE SOUND PERSONALISATION ALGORITHM

409 STORE CONTENT-SPECIFIC DSP PARAMETERS ON DEVICE OR SERVER DATABASE ALONGSIDE MODE IDENTIFIER

410 AUDIO STREAM

411 DETECT AUDIO CONTENT TYPE (VOICE, MUSIC AND/OR MUSIC GENRE, MOVIE, ...) THROUGH AUDIO STREAM ANALYSIS (META DATA/MIR ANALYSIS/ ...)

412 RETRIEVE DSP PARAMETERS USING CONTENT IDENTIFIER

413 OUTPUT PARAMETERS TO AUDIO OUTPUT DEVICE'S SOUND PERSONALISATION DSP

414 PROCESS AUDIO STREAM WITH PARAMETERIZED SOUND PERSONALIZATION DSP

FIG. 5

CONTENT DETECTION

PARAMETER OUTPUT TO DSP

AUDIO
STREAM

$$\begin{pmatrix} t_{1m} & r_{1m} & g_{1m} & .... \\ t_{2m} & r_{2m} & g_{2m} & .... \\ t_{3m} & r_{3m} & g_{3m} & .... \\ t_{4m} & r_{4m} & g_{4m} & .... \\ .... & .... & .... & .... \\ t_{xm} & r_{xm} & g_{xm} & .... \end{pmatrix}$$

$$\begin{pmatrix} t_{1v} & r_{1v} & g_{1v} & .... \\ t_{2v} & r_{2v} & g_{2v} & .... \\ t_{3v} & r_{3v} & g_{3v} & .... \\ t_{4v} & r_{4v} & g_{4v} & .... \\ .... & .... & .... & .... \\ t_{xv} & r_{xv} & g_{xv} & .... \end{pmatrix}$$

$$\begin{pmatrix} t_{1v} & r_{1v} & g_{1v} & .... \\ t_{2v} & r_{2v} & g_{2v} & .... \\ t_{3v} & r_{3v} & g_{3v} & .... \\ t_{4v} & r_{4v} & g_{4v} & .... \\ .... & .... & .... & .... \\ t_{xv} & r_{xv} & g_{xv} & .... \end{pmatrix}$$

PROCESSED
AUDIO

FIG. 6

705

AUDIO CONTENT
PARAMETERS

701 — TARGET HEARING AGE

702 — WET / DRY MIXING

703 — PRI OPTIMIZATION

704 — SUBJECTIVE TESTING
WITH AUDIO CONTENT
SAMPLES

705 — OTHER

FIG. 7

809

Weighting of the unprocessed pathway of the parallel compression — 807

808 — Processed and Unprocessed Recombined

806 — Weighting of the processed pathway of the parallel compression

810

Recombining frequency bands into one audio signal

Gain

Gain

Gain

Gain

α

α

α

α

Bandpass filter n1

n2

n3

nx

delay

Protective limiter — 805

804

Unprocessed signal

802 — Spectral decomposition

801

803

FIG. 8

FIG. 9

EP 3 896 998 B1

```
1001 ──┐  ┌──────────────────────────┐
        │  │  OBTAIN USER'S MASKING CONTOUR  │
        └──│            CURVE            │
           └──────────────────────────┘
                         │
                         ▼
1002 ──┐  ┌──────────────────────────┐
        │  │   DETERMINE TARGET MASKING    │
        └──│      CONTOUR CURVE         │
           └──────────────────────────┘
                         │
                         ▼
1003 ──┐  ┌──────────────────────────┐
        │  │  COMPARE USER'S MASKING CONTOUR │
        └──│  CURVE WITH TARGET MASKING    │
           │       CONTOUR CURVE        │
           └──────────────────────────┘
                         │
                         ▼
1004 ──┐  ┌──────────────────────────┐
        │  │   OUTPUT CALCULATED PARAMETERS  │
        └──│                            │
           └──────────────────────────┘
```

FIG. 10

FIG. 11

FIG. 12A

FIG. 12B

FIG. 12C

FIG. 13

EP 3 896 998 B1

$$[\,(u\,id)_{200}\,,\,t_{200}$$
$$MT_{200}\,PTT_{200}\,]\quad +$$

1401

1402

| $(u\,id)_1$ | $t_1$ | $MT_1$ | $PTT_1$ | $DSP_{q\text{-presets}}\,1$ |
| $(u\,id)_2$ | $t_2$ | $MT_2$ | $PTT_2$ | $DSP_{q\text{-presets}}\,2$ |
| $(u\,id)_3$ | $t_3$ | $MT_3$ | $PTT_3$ | $DSP_{q\text{-presets}}\,3$ |
| $(u\,id)_4$ | $t_4$ | $MT_4$ | $PTT_4$ | $DSP_{q\text{-presets}}\,4$ |
| $(u\,id)_5$ | $t_5$ | $MT_5$ | $PTT_5$ | $DSP_{q\text{-presets}}\,5$ |
| $(u\,id)_6$ | $t_6$ | $MT_6$ | $PTT_6$ | $DSP_{q\text{-presets}}\,6$ |
| ..... | ..... | ..... | ..... | ................ |

$$MT_{200} \cong MT_3$$

$$PTT_{200} \cong PTT_3$$

1403

1405

| $(u\,id)_1$ | $t_1$ | $MT_1$ | $PTT_1$ | $DSP_{q\text{-presets}}\,1$ |
| $(u\,id)_2$ | $t_2$ | $MT_2$ | $PTT_2$ | $DSP_{q\text{-presets}}\,2$ |
| $(u\,id)_3$ | $t_3$ | $MT_3$ | $PTT_3$ | $DSP_{q\text{-presets}}\,3$ |
| $(u\,id)_4$ | $t_4$ | $MT_4$ | $PTT_4$ | $DSP_{q\text{-presets}}\,4$ |
| $(u\,id)_5$ | $t_5$ | $MT_5$ | $PTT_5$ | $DSP_{q\text{-presets}}\,5$ |
| $(u\,id)_6$ | $t_6$ | $MT_6$ | $PTT_6$ | $DSP_{q\text{-presets}}\,6$ |
| ..... | ..... | ..... | ..... | ................ |
| $(u\,id)_{200}$ | $t_{200}$ | $MT_{200}$ | $PTT_{200}$ | $DSP_{q\text{-presets}}\,3$ |

1404

FIG. 14

$[(u\,id)_{300}, t_{300},$
$MT_{300}, PTT_{300}]$

$+$

1502

| $(u\,id)_1$ | $t_1$ | $MT_1$ | $PTT_1$ | $DSP_{q\text{-presets}}\,1$ |
| $(u\,id)_2$ | $t_2$ | $MT_2$ | $PTT_2$ | $DSP_{q\text{-presets}}\,2$ |
| $(u\,id)_3$ | $t_3$ | $MT_3$ | $PTT_3$ | $DSP_{q\text{-presets}}\,3$ |
| $(u\,id)_4$ | $t_4$ | $MT_4$ | $PTT_4$ | $DSP_{q\text{-presets}}\,4$ |
| $(u\,id)_5$ | $t_5$ | $MT_5$ | $PTT_5$ | $DSP_{q\text{-presets}}\,5$ |
| $(u\,id)_6$ | $t_6$ | $MT_6$ | $PTT_6$ | $DSP_{q\text{-presets}}\,6$ |

$MT_5 \lessgtr MT_{200} \approx MT_3$

$PTT_5 \lessgtr PTT_{200} \approx PTT_3$

1503

1505

| $(u\,id)_1$ | $t_1$ | $MT_1$ | $PTT_1$ | $DSP_{q\text{-presets}}\,1$ |
| $(u\,id)_2$ | $t_2$ | $MT_2$ | $PTT_2$ | $DSP_{q\text{-presets}}\,2$ |
| $(u\,id)_3$ | $t_3$ | $MT_3$ | $PTT_3$ | $DSP_{q\text{-presets}}\,3$ |
| $(u\,id)_4$ | $t_4$ | $MT_4$ | $PTT_4$ | $DSP_{q\text{-presets}}\,4$ |
| $(u\,id)_5$ | $t_5$ | $MT_5$ | $PTT_5$ | $DSP_{q\text{-presets}}\,5$ |
| $(u\,id)_6$ | $t_6$ | $MT_6$ | $PTT_6$ | $DSP_{q\text{-presets}}\,6$ |
| $(u\,id)_{200}$ | $t_{200}$ | $MT_{200}$ | $PTT_{200}$ | $DSP_{q\text{-presets}}\,3/5$ |

1501

1504

FIG. 15

EP 3 896 998 B1

FIG. 16

EP 3 896 998 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2010241256 A1
- US 2020029159 A1
- US 2014334644 A1
- EP 3584927 A1
- US 2012063616 A1
- EP 3598442 A1
- US 10199047 B
- US 244727
- US 10455335 B
- US 538541
- EP 18200368
- US 16201839 B

### Non-patent literature cited in the description

- **PAINTER ; SPANIAS**. Perceptual Coding of Digital Audio. *Proc. Of IEEE*, 2000, vol. 88 (4)
- **H. DILLON**. Hearing Aids. Boomerang Press, 2012